# EUROPEAN PATENT APPLICATION

(11) **EP 2 866 414 A1**
(43) Date of publication of application: **29.04.2015**
(21) Application number: 13189756.3
(22) Date of filing: 22.10.2013
(51) Int. Cl.: H04L 29/08, H04W 28/08

(54) **Proxy node discovery**

(71) Applicant: Telefonaktiebolaget L M Ericsson (publ), 164 83 Stockholm (SE)
(72) Inventor: Fernandez Alonso, Susana, 28009 Madrid (ES); Balabhadruni, Venkata Ramesh, 200335 Shanghai (CN)
(74) Representative: Bertsch, Florian Oliver

(57) **Abstract**

Techniques of controlling discovery of a proxy node (103, 103-1, 103-2, 103-3), e.g., a P-CSCF, by a user equipment (201) of a communication network are provided. The user equipment (201) seeks to establish a data connection with a packet-based multimedia core network (250), e.g., an IMS, via the proxy node (103, 103-1, 103-2, 103-3). Based on an availability condition of the proxy node (103, 103-1, 103-2, 103-3), an identity of the proxy node (103, 103-1, 103-2, 103-3) is selectively signaled to the user equipment (201).

## Description

### Technical field

The invention relates to a method of controlling discovery of a proxy node by a user equipment of a communication network, a policy controller, a gateway node, and a data repository. In particular, the invention relates to techniques where an identity of a proxy node is selectively signaled to the user equipment, based on an availability condition of the proxy node.

### Background

In communication networks, a well established way of handling calls is to use a circuit switched (CS) connection between the communication network and a user equipment (UE) for establishing a call. Further, there is the possibility of using a packet switched connection between the communication network and a UE for establishing a call. Packet Switch (PS) infrastructure may be also provided for supporting the establishment via the PS connection and handling packet-based calls and connections in general using, e.g., Internet Protocol (IP) packets for transmitting multimedia content and control signaling of a call. The PS infrastructure may for example be implemented by a packet-based multimedia core network, sometimes referred to as packet telephony system (PTS). When connecting to a PTS, typically a packet data network (PDN) gateway node (GW) provides connectivity for the UE by forwarding packet-based data traffic to and from the UE. Therefore, the GW typically remains in the signaling path of data packets sent to and from the UE, i.e., in the signaling path of a data flow. Sometimes, the GW implements functionality to enable policy enforcement which manages and prioritizes data traffic and controls content-specific and/or user-specific charging.

An example of access technology which may be used for establishing a PS connection to a UE is the LTE (Long Term Evolution) radio access technology (RAT) specified by the 3^{rd} Generation Partnership Project (3GPP). Here a PTS may be used to provide telephony services using PS technology. In particular, a technology referred to as IMS (IP Multimedia Subsystem) may be used for implementing the PTS. In some cases, the IMS may also provide services to UEs which are connected using 2^{nd} Generation (2G) RAT, e.g., Global System for Mobile Communications (GSM) RAT in connection with General Packet Radio Service (GPRS), or 3^{rd} Generation (3G) RAT, e.g., Universal Mobile Telecommunication System (UMTS) RAT. The communications network may thus be equipped with one more corresponding types of radio access network (RAN), such as a GSM radio access network (GRAN), a GSM EDGE radio access network (GERAN), a UMTS radio access network (UTRAN), or an Evolved UTRAN (E-UTRAN). The IMS is sometimes referred to as a global and access-independent, standardized IP connectivity and service control architecture; it is employed to provide various types of multimedia services to subscribers using common Internet-based protocols.

The IMS as specified in the 3GPP Technical Specification (TS) 23.228 and TS 24.229 provides IP multimedia services for communication networks. E.g., IMS provides key features to enrich the end-user person-to-person communication experience through the integration and interaction of services. IMS allows person-to-person, i.e., client-to-client, as well as person-to-content, i.e., client-to-server, communications over a PTS. The IMS makes use of the Session Initiation Protocol (SIP) and Session Description Protocol (SDP) to set up and control calls or sessions between user equipments or a user equipment and one or more application servers. Details of the SIP are described, i.e., in the Internet Engineering Task Force (IETF) Request for Comments (RFC) 3261. Details of the SDP are described, e.g., in IETF RFC 4566. Whilst SIP was predominantly created as a user-to-user protocol, IMS allows network operators and service providers to control user access to services and to charge users accordingly.

A UE can access the IMS by attaching to an access network and registering with the IMS. For this, the respective Access Point Name (APN) which can identify the particular IMS that the UE intends to communicate is employed. A Proxy Call Session Control Function (P-CSCF) is a SIP-based proxy server that is the first point of contact within the IMS for a UE. Typically, a given P-CSCF is assigned to UE before it is registered with IMS. For attachment to the given P-CSCF, the UE performs procedures sometimes referred to as P-CSCF discovery. Once discovered, attachment to the P-CSCF typically enables the UE to initiate IMS registrations and sessions. Then, a service data flow with multimedia content can be established through the IMS. As long as the UE is registered, the P-CSCF remains in the signaling path of the service data flow and processes every SIP related message to and from the UE. In this light, the P-CSCF is sometimes referred to as the access entry point between the network to which the UE is attached and the IMS. In general, the P-CSCF can be located either in a visited network or in the home network to which the user of the UE is subscribed. The P-CSCF discovery results in the identity of a given P-CSCF being provided to the UE.

Various techniques of P-CSCF discovery are known, e.g., from 3GPP TS 29.061, chapter 13a.2.1. E.g., it is known that the GW maintains a preconfigured list of P-CSCF identities. For illustration purposes, in such a scenario, when a UE indicates a request for a P-CSCF address, the GW responds with one or more P-CSCF identities of its preconfigured list. For example, the UE can indicate the request for the P-CSCF in a Protocol Configuration Options Information Element (PCO IE) in a Create Policy Decision Point (PDP) Context Request message on GERAN/UTRAN or for E-UTRAN in initial access request, e.g., Attach Request, PDN Connectivity Request. The GW may use any load balancing mechanisms of its choice, e.g. round robin, random, etc., to distribute the traffic to different P-CSCF addresses, see 3GPP TS 29.061, chapter 13.a.2.2.1.

To increase reliability, flexibility, and resilience operation of the P-CSCF discovery, various techniques are known. A GW can use a so-called keep-alive mechanism to detect failure of a P-CSCF. If the GW detects a failure of a P-CSCF which is assigned to one or more UEs, the GW typically sends an Update PDP Context Request/Update Bearer Request message, see 3GPP TSs 29.061, 23.380, to provide currently available P-CSCF identities to UEs within the PCO IE. The GW typically does not assign, as part of P-CSCF discovery routines, the failed P-CSCF identities to new UEs until it finds that the P-CSCF has recovered.

However, such techniques to increase reliability and resilience operation of the P-CSCF as mentioned above face certain restrictions and / or drawbacks. First, if a P-CSCF is temporarily overloaded, e.g., due to signaling flood - which may occur, e.g., due to a Denial of Service (DoS), due to a Distributed Denial of Service (DDoS) attack, operation failure of the P-CSCF, heavy network usage, and / or other reasons - a reduced or limited availability of the P-CSCF results. Typically, the GW has no knowledge of the availability condition of the P-CSCF. It may happen that the GW continues to provide the respective P-CSCF identity to one or more UEs. At some point, severe network failure may result, e.g., if the P-CSCF crashes or doesn't respond to keep alive messages anymore. Such scenarios may even cause further increased signaling traffic towards the already overloaded P-CSCF and eventually the P-CSCF starts rejecting legitimate signaling.

Further, techniques as mentioned above only have limited flexibility and scalability to enforce operator policies in selecting a P-CSCF. Namely, the GW picks the P-CSCFs by using a specific and pre-defined load balancing algorithm which may operate deterministically only to a limited degree. This results in a limited possibility of the operator to, e.g., distribute different subscribers, i.e., may have random contributions and/or limited possibilities for configuration and setup, to different P-CSCFs based on various criterions.

Still further, when roaming to a visited network with local breakout being employed (see, e.g., 3GPP TS 22.278, chapter 7.1.2), a situation may occur where the GW is located in the visited network, whereas the P-CSCFs is located in the home network. In this case, techniques as mentioned above for P-CSCF discovery have limited scalability and can require significant maintenance: typically, the GW in the visited network needs to be configured with all the P-CSCF addresses in the large number of potential home networks. In general, configuring GWs in the visited network to provision P-CSCFs in the home network can be cumbersome and require significant maintenance efforts.

Therefore, a need exists to provide advanced techniques of discovery of a proxy node. In particular, a need exists for such techniques which have increased scalability, flexibility, and / or reliability. Further, a need exists for such techniques which require reduced maintenance efforts.

### Summary

This need is met by the features of the independent claims. The dependent claims define embodiments.

According to an aspect, a method of controlling discovery of a proxy node by a user equipment of a communication network is provided. The user equipment seeks to establish a data connection with a packet-based multimedia core network via the proxy node. The user equipment is in communication with a gateway node of the communication network which handles data traffic to and from the user equipment. The method comprises a policy controller of the communication network receiving, from the proxy node, a message indicative of an availability condition of the proxy node. The method further comprises the policy controller receiving, from the gateway node, a connection setup request. The method further comprises the policy controller, based on the availability condition, selectively signaling an identity of the proxy node to the gateway node in response to the connection setup request, thereby controlling discovery of the proxy node.

According to a further aspect, a method of controlling discovery of a proxy node by a user equipment of a communication network is provided. The user equipment seeks to establish a data connection with a packet-based multimedia core network via the proxy node. The user equipment is in communication with a gateway node of the communication network which handles data traffic to and from the user equipment. The method comprises the gateway node receiving, from the user equipment, a request for a data connection. The method further comprises the gateway node signaling, to a policy controller of the communication network, a connection setup request. The method further comprises the gateway node receiving, from the policy controller, an identity of at least one proxy node. The method further comprises the gateway node signaling, to the user equipment, one of the at least one received identity of the at least one proxy node.

According to a further aspect, a method of controlling discovery of a proxy node by a user equipment of a communication network is provided. The user equipment seeks to establish a data connection with a packet-based multimedia core network via the proxy node. The user equipment is in communication with the gateway node of the communication network which handles data traffic to and from the user equipment. The method comprises the gateway node receiving, from the user equipment, a request for a data connection. The method further comprises the gateway node signaling, to a policy controller of the communication network, a connection setup request. The method further comprises the gateway receiving, from the policy controller, at least one identity of a proxy node having a limited availability. The method further comprises the gateway node retrieving identities of a plurality of proxy nodes which comprise the at least one identity of the proxy node having a limited availability. The method further comprises the gateway node signaling, to the user equipment, the identity of at least one of the plurality of proxy nodes which is not the received at least one identity of the proxy node having a limited availability.

According to a further aspect, a method of controlling discovery of a proxy node by a user equipment of a communication network is provided. The user equipment seeks to establish a data connection with a packet-based multimedia core network via the proxy node. The user equipment is in communication with the gateway node of the communication network which handles data traffic to and from the user equipment. The method comprises a data repository of the communication network receiving, from a policy controller of the communication network, a request for identities of proxy nodes and a subscriber identity associated with the user equipment. The method further comprises the data repository selecting, based on a subscriber identity, the identity of at least one subscriber-specific proxy node. The method further comprises the data repository signaling, to the policy controller, the identity of the subscriber-specific at least one proxy node.

According to a further aspect, a policy controller of a communication network which is configured to control discovery of a proxy node by a user equipment which seeks to establish a data connection with a packet-based multimedia core network via the proxy node is provided. The user equipment is in communication with a gateway node in the communication network which handles data traffic to and from the user equipment. The policy controller comprises a first interface configured to receive, from the proxy node, a message indicative of an availability condition of the proxy node. The policy controller comprises a second interface configured to receive from the gateway node a connection setup request and further configured to, based on the availability condition, selectively signal an identity of the proxy node to the gateway node, thereby controlling discovery of the proxy node.

According to a further aspect, a gateway node of a communication network which is configured to control discovery of a proxy node by a user equipment which seeks to establish a data connection with a packet-based multimedia core network via the proxy node is provided. The user equipment is in communication with the gateway node which handles data traffic to and from the user equipment. The gateway node comprises a first interface configured to receive, from the user equipment, a request for a data connection. The gateway node further comprises a second interface configured to signal, to a policy controller of the communication network, a connection setup request. The second interface is further configured to receive, from the policy controller, an identity of at least one proxy node. The first interface is further configured to signal, to the user equipment, one of the at least one received identity of the at least one proxy node.

According to a further aspect, a gateway node of a communication network is provided. The gateway node is configured to control discovery of a proxy node by a user equipment which seeks to establish a data connection with a packet-based multimedia core network via the proxy node. The user equipment is in communication with the gateway node which handles data traffic to and from the user equipment. The gateway node comprises a first interface configured to receive, from the user equipment interface, a request for a data connection. The gateway node further comprises a second interface configured to signal, to a policy controller of the communication network, a connection setup request. The second interface is further configured to receive, from the policy controller, at least one identity of a proxy node having a limited availability. The gateway node further comprises a processor configured to retrieve identities of a plurality of proxy nodes which comprise the at least one identity of the proxy node having a limited availability. The first interface is further configured to signal, to the user equipment, the identity of at least one of the plurality of proxy nodes which is not the received at least one identity of the proxy node having a limited availability.

According to a further aspect, a data repository of a communication network is provided. The data repository is configured to control discovery of a proxy node by a user equipment which seeks to establish a data connection with a packet-based multimedia core network via the proxy node. The user equipment is in communication with the gateway node which handles data traffic to and from the user equipment. The data repository comprises an interface configured to receive, from a policy controller of the communication network, a request for identities of proxy nodes and a subscriber identity associated with the user equipment. The data repository further comprises a processor configured to select, based on a subscriber identity, the identity of at least one subscriber-specific proxy node. The interface is further configured to signal, to the policy controller, the identity of the subscriber-specific at least one proxy node.

According to further aspects, other methods, devices, or computer program products for implementing the techniques as mentioned above may be provided. It is to be understood that the features mentioned above and those yet to be explained below may be used not only in the respective combinations indicated, but also in other combinations or in isolation without departing from the scope of the invention.

### Brief Description of the Drawings

FIG. 1 illustrates a Policy and Charging Control (PCC) architecture having a Policy and Charging Rules Function (PCRF) and a Policy Charging Enforcement Function (PCEF) co-located with a GW.
FIG. 2 illustrates an IMS and a signaling path between the GW and the IMS via a P-CSCF.
FIG. 3 illustrates the GW of FIGs. 1 and 2 in greater detail.
FIG. 4 illustrates the PCRF of FIG. 1 in greater detail.
FIG. 5 illustrates a Subscription Profile Repository (SPR) of the PCC architecture.
FIG. 6 illustrates an availability condition of a P-CSCF.
FIG. 7 is a signaling diagram of techniques of P-CSCF discovery according to various embodiments.
FIG. 8 is a signaling diagram of techniques of P-CSCF discovery according to various embodiments.
FIG. 9 is a flowchart of techniques of P-CSCF discovery according to various embodiments.
FIG. 10 is a flowchart of techniques of P-CSCF discovery according to various embodiments.

### Detailed Description of Embodiments

In the following, embodiments of the invention will be described in detail with reference to the accompanying drawings. It is to be understood that the following description of embodiments is not to be taken in a limiting sense. The scope of the invention is not intended to be limited by the embodiments described hereinafter or by the drawings, which are taken to be illustrative only.

The drawings are to be regarded as being schematic representations and elements illustrated in the drawings are not necessarily shown to scale. Rather, the various elements are represented such that their function and general purpose become apparent to a person skilled in the art. Any connection or coupling between functional blocks, devices, components, or other physical or functional units shown in the drawings or described herein may also be implemented by an indirect connection or coupling. A coupling between components may also be established over a wireless connection. Functional blocks may be implemented in hardware, firmware, software, or a combination thereof.

Hereinafter, techniques are described which enable flexible and reliable discovery of a proxy node when a UE connects to a PTS. The proxy node mediates data traffic between the UE and the PTS; e.g., it receives a message from the UE and forwards this message to the PTS, and vice versa. The proxy node may be a functionality implemented on a further physical entity. Predominantly, reference is made to the IMS architecture hereinafter - where the proxy node takes the form of a P-CSCF -, but the techniques are not limited thereto; other types of PTS and/or proxy nodes may be employed. The UE may be connected via a radio access network to a core network of a mobile communications network or may be located in a fixed-line network.

In particular, techniques are described where, based on an availability condition, a UE is selectively made aware of a given proxy node. For example, when the availability condition indicates a high (low) availability, the UE may be made aware (not be made aware) of the identity of the corresponding proxy node, or vice versa. The identity of the proxy node can correspond to any kind of identifier; e.g. an IP address, or a so-called fully qualified domain name (FQDN). Moreover, according to various embodiments, a list of identities of potential proxy nodes to be signaled to the UE (candidate proxy nodes) can be provided in a centralized, dynamic, and / or user-specific manner. This facilitates network maintenance and allows network operators to tailor the discovery of proxy nodes to system requirements, user requirements, and or traffic requirements.

Such techniques may be applied for various communications networks. In the following, the concepts will be explained predominantly in the context of a 3GPP mobile communications network, however the concepts are not limited thereto. The mobile communications network may support one or more types of RAT, such as GSM, GSM EDGE, UMTS, and/or E-UTRAN, also referred to as 3GPP LTE (Long Term Evolution). The mobile communications network may thus be equipped with one or more corresponding types of RANs, such as a GRAN, a GERAN, a UTRAN, or an E-UTRAN. However, it is to be understood that the illustrated concepts may be applied in other types of communications network as well, e.g., other mobile communications networks using other types of RAT such as RATs based on Code Division Multiple Access (CDMA) and that particular types of nodes described in the following may vary in accordance with the type of implemented RATs. Further, the concepts may also applied in a Fixed Mobile Convergence (FMC) scenario, i.e., in a mobile network which also supports fixed access, e.g., using Digital Subscriber Line (DSL) or coaxial cable access technologies. The respective techniques may also be applied in fixed-line communication networks.

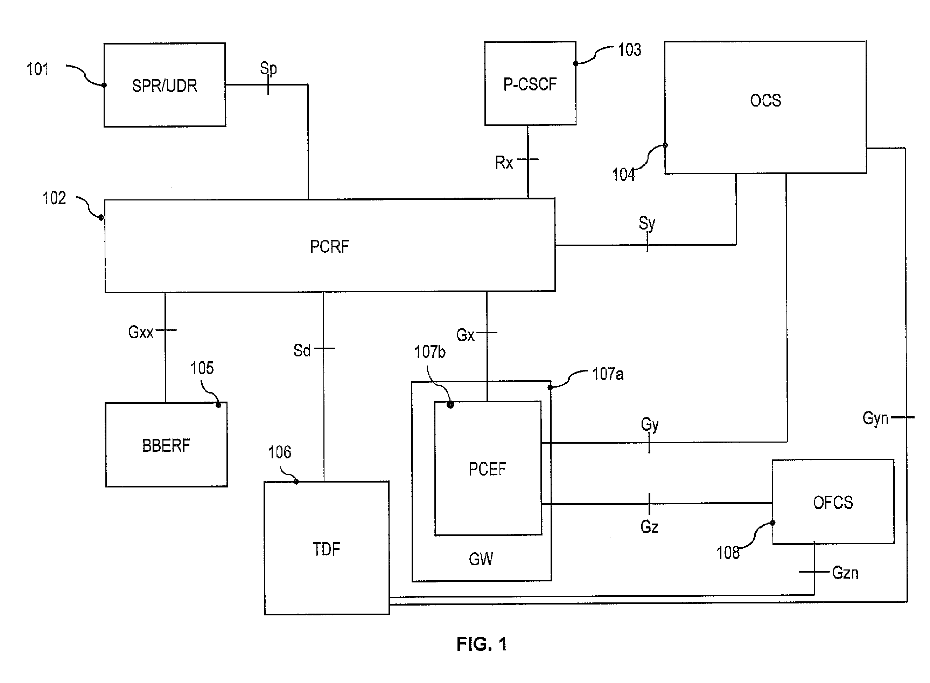

From a conceptual point of view, below techniques are provided which enable to apply aspects and techniques of the PCC architecture to the discovery of a proxy node. Generally speaking, the PCC architecture allows to flexibly tailor network operation in a user-specific manner. The PCC architecture according to the 3GPP TS 23.203, see in particular chapter 5, is depicted in FIG. 1. FIG. 1 focuses on control signaling and illustrates functional entities, some of which are discussed herein, as well as the signaling interfaces between these entities, also referred herein as "reference points"; e.g.: "Rx", "Gx", etc. In greater detail, the PCC architecture enables, e.g., Quality of Service (QoS) control and differentiated charging per service data flow. A service data flow may be defined as the set of data packets exchanged between communication endpoints, e.g. between a user terminal UE, and another UE, or between a UE and an application server, that match a certain PCC rule. E.g., the service data flow may carry multimedia content.

The 3GPP TS 23.203 discloses the PCC architecture in a mobile communications system which comprises an Evolved 3GPP Packet Switched Domain (EPS) which allows, amongst others, to determine and subsequently enforce policies for service data flows along a signaling path. The signaling path can be between the originator and the recipient (not shown in FIG. 1) and can therefore relate to services which involve a UE attached to the communications network. For example, these policies can relate to charging and/or QoS and/or blocking of services and/or forwarding rules.

As illustrated in FIG. 1, the PCC architecture includes a policy controller 102, in the illustrated example implemented as a Policy and Charging Rules Function (PCRF), and a repository 101. In the illustrated example, the repository 101 is assumed to correspond to a Subscriber Profile Repository (SPR). However, it is to be understood that other types of repository could be used as well, e.g., a User Data Repository (UDR). Further, the PCC architecture also includes a Policy Control Enforcement Function (PCEF) 107b. In the scenario of FIG. 1, the PCEF 107b is a function implemented on a GW node 107a. Hereinafter, reference is made to, both, the GW node 107a and the PCEF 107b.

As illustrated, the PCC architecture may also include a Traffic Detection Function (TDF) 106, an Offline Charging System (OFCS) 108, an Online Charging System (OCS) 104, and a Bearer Binding and Event Reporting Function (BBERF) 105. The PCC architecture in FIG. 1 includes an application function (AF) in the form of a P-CSCF 103. The P-CSCF 103 provides access to an IMS (not shown in FIG. 1). In general, an AF is an application function providing a communication service to a UE, or intervening in said provision. Also, if requested by the AF, the PCRF 102 can inform to the AF about data plane events concerning bearers provided to an UE and / or about access network information of the UE. The communications between an AF, e.g. the P-CSCF 103, and the PCRF 102 are accomplished via the "Rx" reference point, e.g. using so-called DIAMETER protocol messages.

The PCRF 102 is configured to perform policy control decision and flow based charging control. The PCRF 102 provides network control regarding detection of service data flows, gating, Quality of Service (QoS), and service data flow based charging towards the PCEF 107b. For this purpose, the PCRF 102 may signal PCC rules to the PCEF 107b via the Gx reference point. The PCEF 107b may be further configured to perform policy enforcement and flow based charging functionalities, which is typically accomplished by applying the PCC rules as signaled by the PCRF 102 via Gx. Likewise, PCC rules may be signaled to the TDF 106 via the Sd reference point.

For example, the PCEF 107 can be co-located within a GW node, e.g. an access GW node such as a gateway GPRS support node (GGSN), a packet data network gateway (P-GW), or any other network node known which is forwarding data packets of the service data flow, e.g., to/from a UE within the context of an IP-connectivity access network session related to said UE. Hereinafter, the access gateway is referred to as GW node and can include all such embodiments as mentioned above.

In the light of the above, the policy controller in the form of a PCRF 102 may also be referred to as a PDP, while the PCEF 107b, possibly in combination with the TDF 106, may also be referred to as a policy enforcing point (PEP). In general, the PDP may be part of a control plane while the PEP may be part of a data plane of the communications network. The PCEF 107b may be responsible for enforcing policies with respect to authorization to access to services, i.e. according to policies received from the PCRF, forwarding of data packets, and accounting and mobility. The PCRF 102 may be responsible for managing individual policies defining network, application services, and subscriber conditions that should be met in order to successfully deliver a service or maintain the QoS of a given service. Other types of PDPs/PEPs may be employed in general. The invention is not limited to the PCC architecture. However, hereinafter, for sake of simplicity, reference is predominantly made to the PCC architecture with the PCRF 102 and the PCEF 107b.

The SPR 101, which may be a standalone database or integrated into an existing subscriber database such as a Home Subscriber Server (HSS), may include subscriber-specific information such as entitlements, rate plans, etc. The SPR 101 may provide subscription data such as a subscriber's allowed services, a pre-emption priority for each allowed service, information on a subscriber's QoS parameters, e.g., a subscribed guaranteed bandwidth QoS, a subscriber's charging related information, e.g., location information relevant for charging, a subscriber category, e.g., whether the subscriber is a gold user to be provided with a high QoS or a silver or bronze user to be provided with lower QoS. Such information may be used by the PCRF 102 to control the applying of a policy. The PCRF 102 and the SPR 101 communicate via the Sp reference point.

As an effect, the PCC architecture as discussed above with respect to FIG. 1 allows to apply policies with respect to the data flow along the signaling path which relate to a service originated or terminated by a UE. This application of policies can take into account the specific service invoked or terminated by the UE and alternatively or additionally, the profile data corresponding to the subscriber identified by said UE in a subscriber-specific manner.

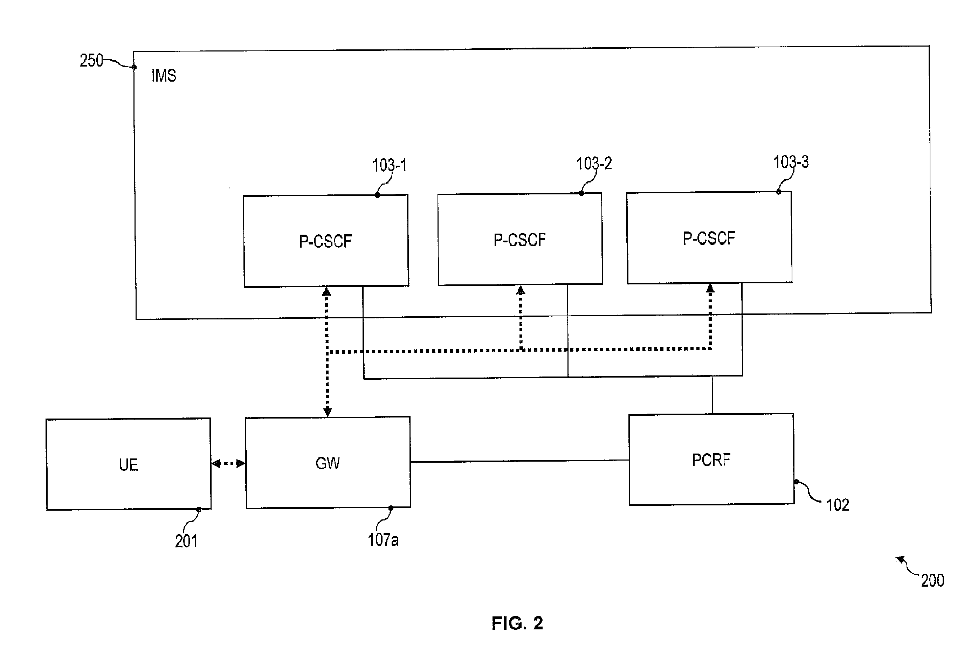

In FIG. 1, the P-CSCF 103 acts as a SIP-proxy for messages sent and/or received by an UE for a communication service based on a SIP protocol. An example would be the IMS as shown in FIG. 2. In FIG. 2, the UE 201 seeks to establish a data connection with a packet-based multimedia core network 250 in the form of the IMS. The data connection is established via at least one of the proxy nodes 103-1, 103-2, 103-3, in the scenario of FIG. 2 in the form of P-CSCFs. A larger or smaller number of P-CSCFs 103-1, 103-2, 103-3 may be available. The UE 201 is in connection with the GW node 107a which handles the data traffic to and from the UE 201, in particular the packet-based data traffic. The dotted lines in FIG. 2 indicate potential signaling paths of the service data flow between the UE 201 and the IMS 250. As can be seen, principally, the UE 201 can be in communication with any one of the P-CSCFs 103-1, 103-2, 103-3.

Below, techniques are discussed which enable the PCRF 102 to control the discovery of a given one of the P-CSCFs 103-1, 103-2, 103-3. In particular, the discovery of one of the P-CSCFs 103-1, 103-2, 103-3 can be accomplished taking into account an availability condition of each one of the P-CSCFs 103-1, 103-2, 103-3. For example, the P-CSCFs 103-1, 103-2, 103-3 can signal a message which is indicative of the availability condition of the corresponding P-CSCFs 103-1, 103-2, 103-3 to the PCRF 102. The availability condition may correspond to a load of the respective P-CSCF 103-1, 103-2, 103-3 and / or further operating conditions. In case the PCRF 102 receives from the GW node 107a a connection setup request, the PCRF 102 can selectively signal the identity of each one of the proxy nodes 103-1, 103-2, 103-3 to the GW node 107a based on the respective availability condition. By such means, the PCRF 102 can control the discovery of each one of the P-CSCFs 103-1, 103-2, 103-3, e.g., by signaling (not-signaling) the identity of the corresponding P-CSCF 103-1, 103-2, 103-3 which has a high (low) availability, or vice versa.

The GW node 107a, respectively the co-located PCEF 107b, can send the connection setup request when the UE 201 requests the establishment and/or modifications of service data flow through the communications network 200 and, e.g. towards the IMS 250. In such a case, the PCEF 107b can assign PCC rules to the requested service data flow; these PCC rules may be provided by the PCRF 102 to the PCEF 107b in response to the connection setup request via the Gx interface (cf. FIG. 1). As will be appreciated from the above, the connection setup request received by the PCRF 102 from the GW node 107a can have various functionalities and/or trigger certain PCC related activities; however, it may also trigger the P-CSCF discovery. In this light, the PCC rules according to various reference implementations may further comprise PCC-based P-CSCF discovery information. A connection setup request sent from a gateway node (107) to a policy controller (102) preferably comprises an identifier associated to the UE for which said connection setup is requested or an identifier of the user of said UE.

As can be seen from the above, in such scenarios the PCRF 102 may receive and/or collect and/or store information about the availability condition of one or more P-CSCFs 103, 103-1, 103-2, 103-3. In this respect, the PCRF 102 may employ a list or database to keep track of the current availability conditions of the one or more P-CSCFs 103-1, 103-2, 103-3. The PCRF 102 employs this information to provide to one or more PCEFs 107b information about the P-CSCFs 103, 103-1, 103-2, 103-3 that can be selected as part of the P-CSCF discovery routine. This may happen, e.g., upon request from a PCEF 107b to set up an IP-Connectivity Access Network (IP-CAN) session for the UE 201; namely a connection setup request sent from a gateway node (107b) to a policy controller node (102). The connection setup request from the gateway node (107b) hosting the PCEF (107a) to the node hosting the PCRF (102) is commonly referred as IP-CAN session request, and may take the form of a DIAMETER Credit Control Request (CCR) message sent from the PCEF 107b, respectively the gateway node107a, to the PCRF 102.

Selectively signaling the identity of a P-CSCF 103, 103-1, 103-2, 103-3 can correspond to signaling or not signaling the identity, depending on the particular scenario. Both scenarios may provide as an effect that the P-CSCFs 103, 103-1, 103-2, 103-3 that can be selected for the UE 201 are those which are not experiencing an overload condition; thereby, allowing to mitigate the traffic overload that can be experienced by some of the available P-CSCFs 103, 103-1, 103-2, 103-3.

In one scenario, the P-CSCFs 103, 103-1, 103-2, 103-3 that are experiencing a limited availability are those that are signaled to the PCEF 107b so that the PCEF 107b removes these P-CSCFs from a preconfigured list. In other words, the PCRF 102 informs the PCEF 107b of the P-CSCFs 103, 103-1, 103-2, 103-3 having a limited availability so that the PCEF 107b can filter out these P-CSCFs 103, 103-1, 103-2, 103-3. For example, if the availability condition indicates a limited availability of one of the P-CSCFs 103, 103-1, 103-2, 103-3, the signaling of the identity of this P-CSCF 103, 103-1, 103-2, 103-3 is executed to make the GW node 107a aware of the limited availability of this P-CSCF 103, 103-1, 103-2, 103-3. Thereby, discovery of the P-CSCF 103, 103-1, 103-2, 103-3 having a limited availability is avoided.

In a further scenario, the PCRF 102 obtains, e.g., from the SPR 101, information about the P-CSCFs 103, 103-1, 103-2, 103-3 which are selectable for the UE 201 and drops those P-CSCFs 103, 103-1, 103-2, 103-3 that have a limited availability. Only the available P-CSCFs 103, 103-1, 103-2, 103-3 are signaled to the PCEF 107b. I.e., if the availability condition indicates a limited availability of the P-CSCF 103, 103-1, 103-2, 103-3, the signaling of the identity of this P-CSCF 103, 103-1, 103-2, 103-3 is not executed. In other words, in such a scenario, the PCEF 107b may not be made aware of the identity of the corresponding P-CSCF 103, 103-1, 103-2, 103-3 having a limited availability - thereby, it can be avoided that the UE 201 is assigned to this corresponding P-CSCF 103, 103-1, 103-2, 103-3. For example, the PCEF 107b may not be aware at all of the identity of the respective P-CSCF 103, 103-1, 103-2, 103-3, because in this scenario it does not store a preconfigured list of candidate P-CSCFs 103, 103-1, 103-2, 103-3. For example, the PCRF 102 may receive from the SPR 101 identities of a plurality of P-CSCFs 103, 103-1, 103-2, 103-3. Some of the plurality of P-CSCFs 103, 103-1, 103-2, 103-3 may have a limited availability. It is then possible to signal the identity of the plurality of P-CSCFs 103, 103-1, 103-2, 103-3 to the PCEF 107b, with the exception of the identities of the one or more P-CSCFs 103, 103-1, 103-2, 103-3 having a limited availability.

For example, the plurality of P-CSCFs 103, 103-1, 103-2, 103-3 received from the SPR 101 may be subscriber-specific, i.e., determined in dependence of a subscriber identity of the subscriber associated with UE 201. For example, the PCRF 102 may receive a subscriber identity associated with the UE 201, e.g. in a connection setup request. In response to the receiving of the connection setup request and the subscriber identity, it is possible that the PCRF 102 signals the subscriber identity to the SPR 101, thereby enabling receiving of identities of a subscriber-specific plurality P-CSCFs 103, 103-1, 103-2, 103-3. By such techniques, a network operator may provision certain P-CSCFs 103, 103-1, 103-2, 103-3 to certain kinds or classes of users. E.g., during times of heavy network load, gold users may be preferred to avoid delay, etc.

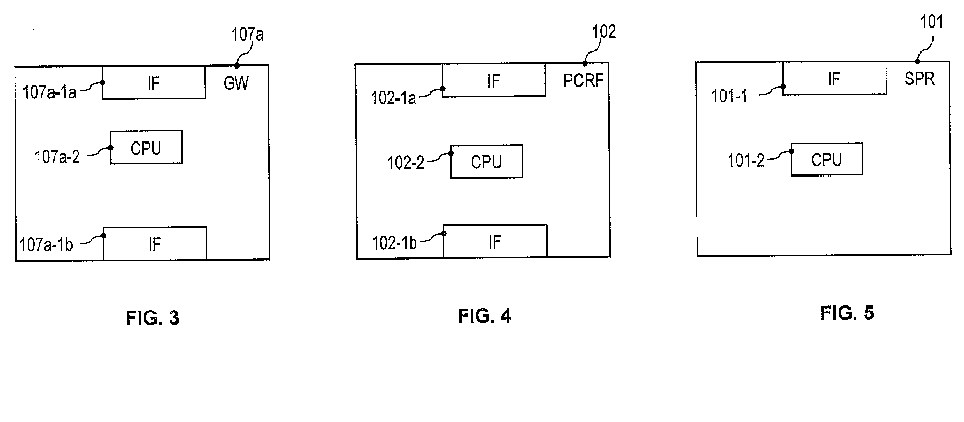

Turning, to FIG. 3, a more detailed schematic illustration of the GW node 107a is provided. The GW node 107a comprises a processor 107a-2 (labelled CPU in FIG. 3) which implements the PCEF 107b functionality and/or handles data forwarding functionality. Further, the GW node 107a comprises a first interface 107a-1a (labelled IF in FIG. 3) which is configured to communicate with the UE 201 (not shown in FIG. 3). A second interface 107a-1b is configured to communicate with the PCRF 102, e.g., via the Gx reference point (cf. FIG. 1, not shown in FIG. 3). The Gx reference point is used for provisioning and removal of PCC rules from the PCRF 102 to the PCEF 107b and the transmission of traffic plane events, bearer and subscriber related information from the PCEF 107b to the PCRF 102. The PCRF 102 uses the information received from PCEF 107b as a part of the input for the PCC decisions. The Gx reference point is used for charging control and / or policy control by applying attribute-value-pairs (AVPs) relevant to the respective application. According to various embodiments, the Gx reference point is employed to instruct the PCEF 107b with a list of P-CSCFs 103, 103-1, 103-2, 103-3 having a limited availability; in various embodiments, the Gx reference point is employed to instruct the PCEF 107b with a list of P-CSCFs 103, 103-1, 103-2, 103-3 that can be used in P-CSCF discovery procedures, i.e., do not have a limited availability.

For example, according to various embodiments, a P-CSCF 103, 103-1, 103-2, 103-3 which is close to overload will notify the PCRF 102 over the Rx reference point using a DIAMETER overload control mechanism. For each APN, the PCRF 102 stores and maintains the list of P-CSCFs 103, 103-1, 103-2, 103-3 that are overloaded or close to be overloaded, i.e., have a limited availability. The PCRF 102 provides this list P-CSCFs 103, 103-1, 103-2, 103-3 with degraded availability to the PCEF 107b so that a P-CSCF 103, 103-1, 103-2, 103-3 having a limited availability is not assigned to the UE 201. In such a scenario, the CPU 107a-2 may also maintain a list of candidate P-CSCFs 103, 103-1, 103-2, 103-3 and pick one of the candidate P-CSCFs 103, 103-1, 103-2, 103-3 which is not known by indication from the PCRF 102 to have a limited availability. In other words, the PCEF 107b may remove overloaded P-CSCFs 103, 103-1, 103-2, 103-3 from its locally configured list of selectable P-CSCF 103, 103-1, 103-2, 103-3 and send the result to the UE. In other words, those P-CSCFs 103, 103-1, 103-2, 103-3 having a limited availability are filtered from the locally configured list of candidate P-CSCFs 103, 103-1, 103-2, 103-3 in the PCEF 107b.

In other words, according to various embodiments, the GW node 107a, respectively the PCEF 107b can receive from the UE 201 a request for a data connection. It may then signal to the PCRF 102 a connection setup request. In response, the GW node 107a, respectively the PCEF 107b, may receive from the PCRF 102 at least one identity of a P-CSCF 103, 103-1, 103-2, 103-3 having a limited availability. The GW node 107a, respectively the PCEF 107b, may retrieve identities of a plurality of P-CSCFs 103, 103-1, 103-2, 103-3 which comprise the received at least one identity of the P-CSCF 103, 103-1, 103-2, 103-3 having a limited availability, e.g., by accessing the locally configured list of selectable P-CSCFs 103, 103-1, 103-2, 103-3. The GW node 107a, respectively the PCEF 107b, may signal, to the UE 201, the identity of at least one of the plurality of P-CSCFs 103, 103-1, 103-2, 103-3 which is not the received at least one identity of the P-CSCF 103, 103-1, 103-2, 103-3 having a limited availability.

However, it is also possible according to various embodiments that it is expendable to provision the locally configured list of selectable P-CSCFs 103, 103-1, 103-2, 103-3 in the PCEF 107b. Such scenarios may provide the effect of larger flexibility and reduced maintenance efforts. For example, it may be expendable to update and administer locally configured lists of candidate P-CSCFs 103, 103-1, 103-2, 103-3 for such PCEFs 107b. This may provide relief of certain cost-intensive tasks to the network operator.

For example, upon receiving from the UE 201 the request for the data connection and upon signaling to the PCRF 102 the connection setup request, the GW node 107a, respectively the PCEF 107b may receive, from the PCRF 102, an identity of at least one P-CSCF 103, 103-1, 103-2, 103-3. This received at least one identity may be previously screened / filtered by the PCRF 102 to make sure that it does not contain any identities of temporarily unavailable and/or overloaded P-CSCFs 103, 103-1, 103-2, 103-3. Then, the GW node 107a, respectively the PCEF 107b may signal to the UE 201 one of the at least one received identity of the at least one P-CSCF 103, 103-1, 103-2, 103-3. In this scenario, it is expendable to provision a list of P-CSCF candidates in the PCEF 107b. In such a scenario, maintenance efforts associated with the discovery of P-CSCFs 103, 103-1, 103-2, 103-3 may be reduced. In particular, the P-CSCF candidates may be dynamically provided on demand.

In FIG. 4, a more detailed, schematic illustration of the PCRF 102 is provided. The PCRF 102 comprises a processor 102-2 (labelled CPU in FIG. 4) which can execute various tasks in the context of the PDP routines. The PCRF 102 comprises a second interface 102-1b (labelled IF in FIG. 4) which is configured to communicate with the GW node 107a (cf. FIG. 3) via the Gx reference point. The PCRF 102 also comprises a first interface 102-1a which is configured to communicate with the P-CSCF 103, 103-1, 103-2, 103-3 via the Rx reference point. For sake of simplicity, further interfaces, e.g., corresponding to further reference points as depicted in FIG. 1, are not shown in FIG. 4. The Rx reference point is used to exchange application level session information between PCRF 102 and the P-CSCF 103, 103-1, 103-2, 103-3. The P-CSCF 103, 103-1, 103-2, 103-3 provides the session and media related information to the PCRF 102. The P-CSCF 103, 103-1, 103-2, 103-3 may request the PCRF 102 to report the IP-CAN session events, e.g., including bearer events and events on AF signaling transport, and access network information. The PCRF 102 uses the information from P-CSCF 103, 103-1, 103-2, 103-3 as a part of the input for the PCC decisions. Overload signaling via DIAMETER protocol based interfaces is known to some extent, e.g., from 3GPP Technical Request (TR) 29.809. In general, such reference implementation may be applied to various reference points according to the DIAMETER standard. These reference implementations may provide the PCRF 102 and P-CSCF 103, 103-1, 103-2, 103-3 with the procedures for exchanging information on the availability condition. According to various embodiments, a list of the P-CSCFs 103, 103-1, 103-2, 103-3 which have a limited availability, i.e., are overloaded or are close to be overloaded, is maintained by the PCRF 102. Further, in various embodiments this information is used to instruct the PCEF 107b as part of the P-CSCF 103, 103-1, 103-2, 103-3 discovery.

For example, according to various embodiments, the processor 102-2 can be configured to store, maintain, and / or administer a list of P-CSCFs 103, 103-1, 103-2, 103-3 that are overloaded or close to be overloaded. Upon the received connection setup request from the gateway node 107a in respect to a UE, e.g. a UE that has initiated or modified a data connection to the communications network, the PCRF 102 may receive from the SPR 101 the subscriber-specific list of P-CSCFs 103, 103-1, 103-2, 103-3, execute a comparison between the list received from the SPR 101, e.g. the SPR determines said subscriber-specific P-CSCF lists according to identifier/s received from the PCRF in respect to the UE, or to the user of the UE, and the overloaded P-CSCFs 103, 103-1, 103-2, 103-3, and may remove the overloaded P-CSCFs 103, 103-1, 103-2, 103-3 from this list, before sending the updated list to the PCEF 107b. Then, the PCEF 107b can use the list received from the PCRF 102 to send it to the UE 201 to facilitate discovery of non-overloaded P-CSCFs 103, 103-1, 103-2, 103-3. In such a scenario - if compared to various reference implementations - it may be expendable to configure the PCEF 107b with the respective list of P-CSCFs 103, 103-1, 103-2, 103-3; the list is provided on-demand by the PCRF 102. The PCRF 102 filters any P-CSCFs 103, 103-1, 103-2, 103-3 with limited availability before providing the list.

For example, it is possible that the PCRF 102 maintains the current status of the availability condition of the P-CSCFs 103, 103-1, 103-2, 103-3. This maintaining may include, e.g.: repeatedly polling the availability condition of the P-CSCFs 103, 103-1, 103-2, 103-3, i.e., pro-actively request - e.g., at a given time interval or triggered by other events - the P-CSCFs 103, 103-1, 103-2, 103-3 to indicate their (un)availability. In such a manner, complete system failures of one or more of the P-CSCFs 103, 103-1, 103-2, 103-3 may be detected via a timeout. For example, this could be implemented by means of a DIAMETER overload control application (DOCA). The P-CSCFs 103, 103-1, 103-2, 103-3 may send the DOCA-Report-Request to the PCRF 102 including information about the beginning of an overload situation, its severity, and / or the scope where it is applicable, e.g. the host level.

Since the DOCA functionality is typically bi-directional, it is also possible that the PCRF 102 asks or polls for this information instead. In that case the information would be received in the DOCA-Report-Answer message.

Alternatively or additionally, it is also possible that the maintaining of the current status of the availability condition comprises: repeatedly receiving the availability condition piggy-backed on further control messages. For example, the indication of the availability condition can be included in all or almost all DIAMETER messages for all or almost all applications. For example, the P-CSCF 103, 103-1, 103-2, 103-3 may use any of the active Rx sessions to provide the indication of the availability condition. Any request or response initiated by the P-CSCF 103, 103-1, 103-2, 103-3 may include the indication of the availability condition. Again, the severity and/or the scope of the overload condition may be included.

In FIG. 5, a more detailed, schematic illustration of the SPR 101 is provided. The SPR 101 comprises a processor 101-2 (labelled CPU in FIG. 5) which can execute various tasks in the context of subscriber-specific data handling. The SPR 101 comprises an interface 101-1 which is configured to communicate with the PCRF 102 via the Sp reference point. The Sp reference point lies between the SPR 101 and the PCRF 102 (cf. FIG. 1). It allows the PCRF 102 to request subscription information related to the IP CAN transport level policies from the SPR 101 based on a subscriber identification, a PDN identifier and / or further IP CAN session attributes. The Sp reference point also enables the SPR 101 to notify the PCRF 102 when the subscription information has been changed if the PCRF 102 has requested such notifications. In various embodiments, the PCRF 102 stores the list of P-CSCFs 103, 103-1, 103-2, 103-3 received from the SPR 101 via the Sp reference point.

In such a scenario, the SPR 101, upon receiving from the PCRF 102 a request for identities of the P-CSCFs 103, 103-1, 103-2, 103-3 and a subscriber identity associated with the UE 201, may select the identity of at least one subscriber-specific P-CSCF 103, 103-1, 103-2, 103-3. The SPR 101 may signal this at least one identity to the PCRF 102.

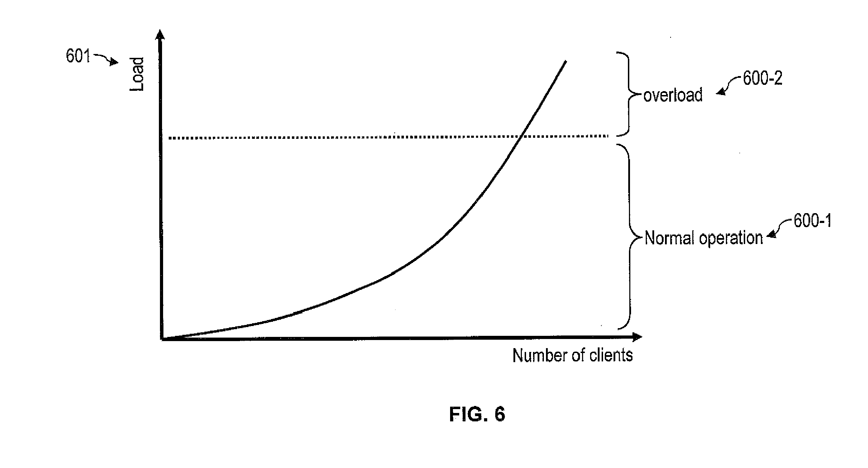

In FIG. 6, the availability condition of a certain P-CSCF 103, 103-1, 103-2, 103-3 is illustrated. In particular, in FIG. 6, a load 601 of the respective P-CSCF 103, 103-1, 103-2, 103-3 is illustrated. The load 601 can, e.g., correspond to traffic per time and / or number of requests / responses per time and / or number of computational tasks, etc.. Typically, the higher (lower) the load 601, the longer (shorter) is a response time of the respective P-CSCF 103, 103-1, 103-2, 103-3. In this regard, the load 601 can be associated with a severity of an overload situation 600-2 - the overload situation 600-2 may correspond to a limited availability of the respective P-CSCF 103, 103-1, 103-2, 103-3. For example, depending on if the load 601 is below or above of a threshold (e.g as indicated in FIG. 6 by the horizontal dotted line), the respective P-CSCF 103, 103-1, 103-2, 103-3 may be referred to as operating under normal conditions 600-1, or under overload condition 600-2. For example, the PCRF 102 may receive an indication of the load 601 of the P-CSCF 103, 103-1, 103-2, 103-3, execute a threshold comparison with a predefined threshold, and selectively signal the identity of the respective P-CSCF 103, 103-1, 103-2, 103-3 to the PCEF 107b in dependence of the threshold comparison.

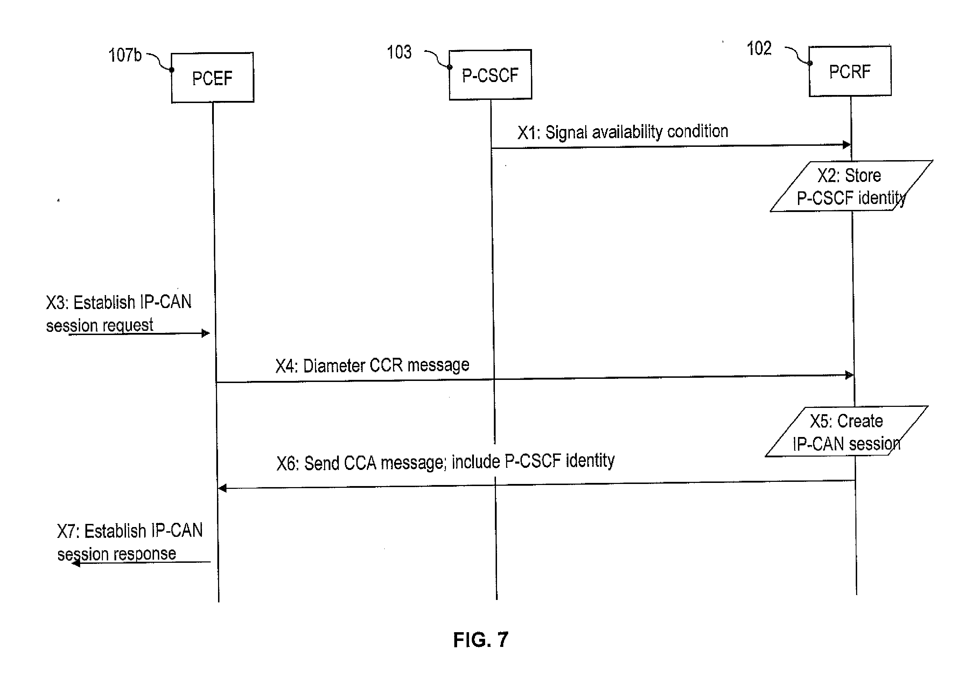

In FIG. 7, a signaling diagram illustrates techniques of P-CSCF discovery according to various embodiments. In the techniques as illustrated in FIG. 7, the PCEF 107b maintains a preconfigured list of P-CSCF 103, 103-1, 103-2, 103-3 candidates. The PCEF 107b receives a message from the PCRF 102 which indicates at least one P-CSCF 103, 103-1, 103-2, 103-3 which has a limited availability. Then the PCEF 107b signals at least one identity to the UE 201, which corresponds to a P-CSCF 103, 103-1, 103-2, 103-3 not experiencing limited availability.

First, in step X1, the P-CSCF 103 signals its availability condition to the PCRF 102. It sends a message which is indicative of the availability condition. The message may explicitly or implicitly indicate the availability condition, e.g., according to predefined rules. The message may include a Boolean indicator which indicates limited availability; it may include a plurality of bits which indicate a severity of the limited availability. It is even sufficient that the message, per-se, indicates the limited availability, i.e., by the mere fact of being received. For example, the availability condition can indicate the overload condition 600-2. However, it would also be possible that the P-CSCF 103 indicates normal operation 600-1 as part of step X1. Step X1 may be executed pro-actively by the P-CSCF 103 or can be triggered by a respective request of the PCRF 102 (not shown in FIG. 7).

For example, in step X1, the PCRF 102 is made aware of the overload situation 600-2 in the P-CSCF 103. Then, in step X2, the PCRF 102 stores the identity of the P-CSCF 103 in connection with an explicit or implicit indication that the P-CSCF 103 is overloaded. E.g., the PCRF 102 may store the severity of the overload situation 600-2 (cf. FIG. 6). In other words, the PCRF 102 may maintain a list of overloaded P-CSCFs 103, 103-1, 103-2, 103-3. Whenever a new notification of an overload status condition (e.g.: either, 600-1 or 600-2) is received from one of the P-CSCFs 103, 103-1, 103-2, 103-3, this list will be updated. Also, the PCRF 102 can take measures to keep the list up-to-date, i.e., poll for the present availability condition from time to time.

As known from various reference implementations, next the UE 201 establishes a PDN connection. As part of this, in step X3, the GW node 107a, respectively the PCEF 107b receives an IP-CAN session request, sometimes also referred to as Create Session Request or Create PDP Context/Request. Then, in step X4, the GW node 107a, respectively the PCEF 107b initiates an IP-CAN Session Establishment, according to various reference implementations. In step X4, for this purpose, the GW node 107a, respectively the PCEF 107b sends a DIAMETER Message CCR.

In step X5, the PCRF 102 creates the IP-CAN Session. In step X6, the PCRF 102 replies to the IP-CAN Session Establishment Request received in step X4. This is accomplished by sending the DIAMETER Message CCA. Also, in step X6, the PCRF 102 signals the identity of the overloaded P-CSCF 103, as indicated in step X1. In response to the receiving of the identity of the P-CSCF 103 which is overloaded, the PCEF 107b checks if the preconfigured list of candidate P-CSCFs 103, 103-1, 103-2, 103-3 includes the overloaded P-CSCF 103 and removes it from the preconfigured list. Then, in step X7, the GW node 107a, respectively the PCEF 107b answers the procedure defined in step X3 by sending a Create Session Response/Create PDP Context Response including one or more available P-CSCFs 103, 103-1, 103-2, 103-3 which have not been tagged as overloaded as part of step X6.

This signaling routine may be subject to various modifications. E.g., the PCRF 102 may request the availability condition of the P-CSCF 103 upon receiving the CCR message in step X4.

As will be appreciated from the above, by selectively signaling the identity of those P-CSCFs 103, 103-1, 103-2, 103-3 which are known to be overloaded from the PCRF 102 to the PCEF 107b in step X6, discovery of those P-CSCFs 103, 103-1, 103-2, 103-3 can be avoided. This is because the PCEF 107b ensures that it does not provide corresponding identities to the UE 201 in step X7. In the scenario discussed above, the PCEF 107b maintains a list of P-CSCF candidates.

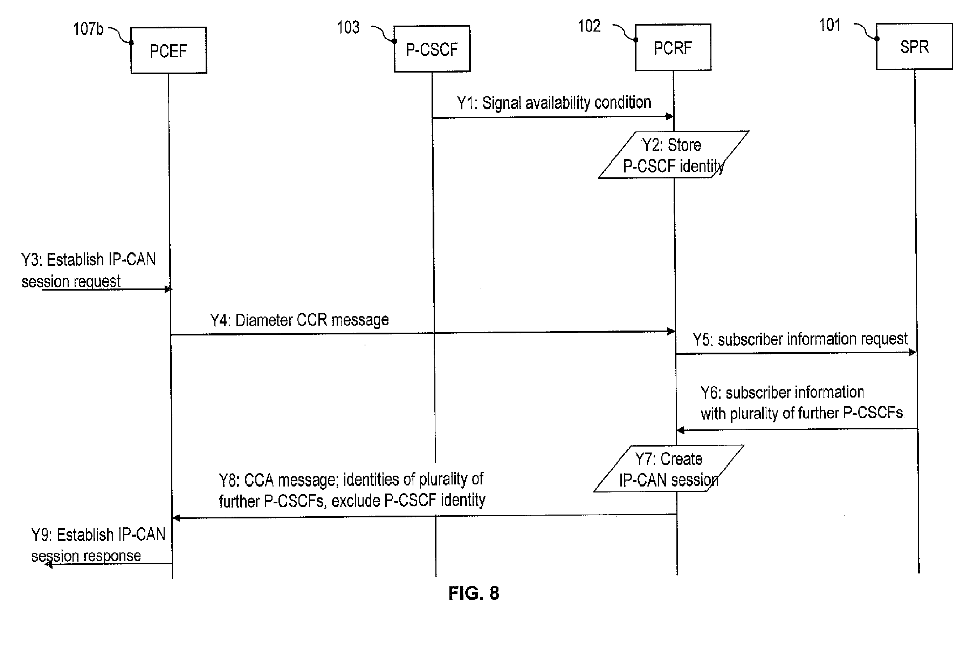

With respect to FIG. 8, below a scenario will be discussed where it is expendable to maintain such a list in the PCEF 107b. Here, the PCEF 107b receives a screened and filtered list of P-CSCF candidates 103, 103-1, 103-2, 103-3 from the PCRF 102; such P-CSCFs 103, 103-1, 103-2, 103-3 which have a limited availability are not signaled to the PCEF 107b. In FIG. 8, the steps Y1-Y4 correspond to the steps X1-X4 of FIG. 7.

In step Y5, the PCRF 102 contacts the SPR 101 to obtain the subscription information, e.g. including an identifier of the UE, or an identifier of the user of the UE received in the establishment of the IP-CAN session request, Y3. In particular, as part of step Y5, the PCRF 102 signals the subscriber identity of the UE 201 to the SPR 101. Then, the SPR 101 can select subscriber-specific P-CSCFs 103, 103-1, 103-2, 103-3 and signal the latter to the PCRF 102 as part of step Y6. Steps Y5 and Y6 are optional. E.g., it would be possible that the PCRF 102 keeps a non-subscriber-specific list of P-CSCFs 103. E.g., it can also be possible that the PCRF 102 has an internal database relating subscriber identifiers - e.g. UE 201 identifiers and/ or UE's user identifiers - and selectable P-CSCFs 103, 103-1, 103-2, 103-3 on a per subscriber identifiers basis. Also, the SPR 101 may provide non-subscriber-specific identities of P-CSCFs 103, 103-1, 103-2, 103-3.

In step Y7, the PCRF 102 creates the IP-CAN Session; step Y7 corresponds to step X5 of FIG. 7. Further, the PCRF 102 cross-checks the identities of P-CSCFs 103, 103-1, 103-2, 103-3 received from the SPR 101, with those identities of P-CSCFs 103, 103-1, 103-2, 103-3 which are known to be overloaded, e.g., from the steps Y1 and Y2. In step Y8, the PCRF 102 signals the identities of those P-CSCFs 103, 103-1, 103-2, 103-3 which have been provided by the SPR 101 in step Y6 and are not known to have a limited availability.

One or more or all of these identities provided by the PCRF 102 to the PCEF 107b, respectively the GW node 107a, can be provided to the UE 201 in step Y9. Step Y9 of FIG. 8 corresponds to step X7 of FIG. 7.

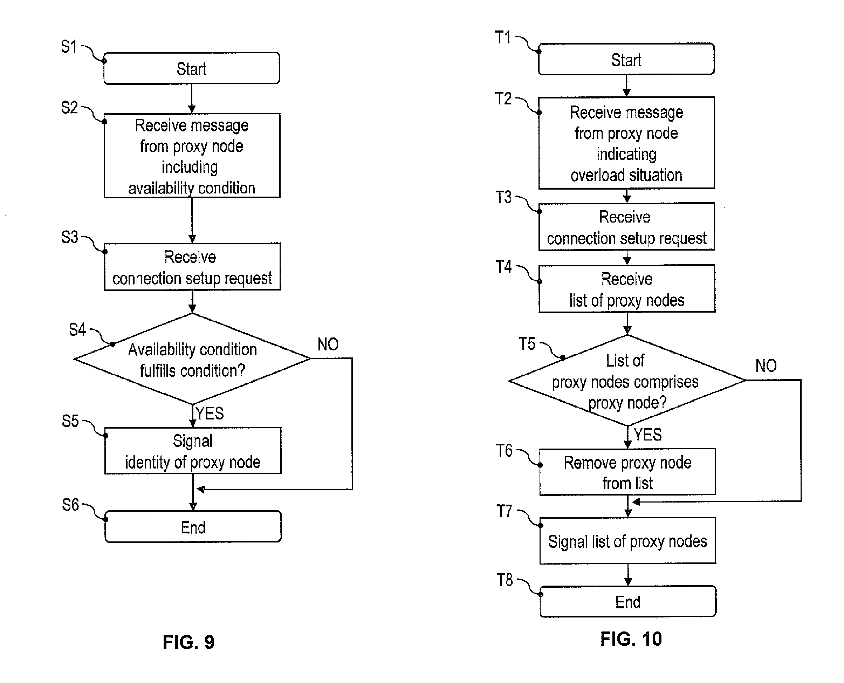

In FIG. 9, a flowchart of a method of controlling discovery of a P-CSCF 103, 103-1, 103-2, 103-3 according to various embodiments of the present application is depicted. The method starts with step S1. In step S2, the PCRF 102 receives, from the P-CSCF 103, 103-1, 103-2, 103-3, a message which indicates the availability condition of the P-CSCF 103, 103-1, 103-2, 103-3. For example, the availability condition can indicate an overload condition 600-2 or a normal operation 600-1.

Next, in step S3, a connection setup request is received from the GW node 107a, respectively the PCEF 107b. This connection setup request, as an effect, triggers the discovery of the P-CSCF 103, 103-1, 103-2, 103-3. Namely, in step S4, it is checked whether the availability condition as received in step S2 matches a predefined condition. For example, the availability condition may indicate a degree 601 of the overload condition (600-1, 600-2).If the severity is below or above a threshold, the identity of the respective P-CSCF 103, 103-1, 103-2, 103-3, may be selectively signaled to the gateway node 107a, respectively the PCEF 107b (step S5). Otherwise, step S5 is skipped. The method ends in step S6.

In FIG. 10, a flowchart of a further method of control and discovery of a P-CSCF 103, 103-1, 103-2, 103-3 is illustrated. The method starts with step T1, the steps T2, T3 correspond to the steps S2, S3 of FIG. 9. Next, in step T4, the PCRF 102 receives a list of P-CSCFs 103, 103-1, 103-2, 103-3 from the SPR 101. The list may be user-specific or may be a non-user-specific default list. In step T5, the PCRF 102 checks whether the received list of P-CSCFs 103, 103-1, 103-2, 103-3 of step T4 comprises any overloaded P-CSCFs 103, 103-1, 103-2, 103-3. If this is the case, the overloaded P-CSCFs 103, 103-1, 103-2, 103-3 are removed from the list of proxy nodes provisioned by the SPR 101 in step T6. Otherwise, the method commences directly with step T7, where the updated list of P-CSCFs 103, 103-1, 103-2, 103-3 is signaled to the GW node 107a, respectively the PCEF 107b. By removing those P-CSCFs 103, 103-1, 103-2, 103-3 which are known to be overloaded in step T6, discovery of these P-CSCFs 103, 103-1, 103-2, 103-3 by the UE 201 can be avoided.

In FIGs. 9 and 10, once the proxy discovery has been completed after steps S6 and T8, respectively, the UE 201 can establish the connection with the IMS 250 via a specific P-CSCF 103, 103-1, 103-2, 103-3. Then, multimedia content can be signaled using a service data flow along a signaling path which includes the GW node 107a and the specific P-CSCF 103, 103-1, 103-2, 103-3.

Although the invention has been shown and described with respect to certain preferred embodiments, equivalents and modifications will occur to others skilled in the art upon the reading and understanding of the specification. The present invention includes all such equivalents and modifications and is limited only by the scope of the appended claims.

For example, while reference has been made predominantly to the PTS operating according to the IMS specifications, in general techniques as described above may be readily employed to cooperate with any other type of PTS. In particular, proxy nodes different than the P-CSCF may be used in connection with the techniques described above. E.g., the type of the proxy node may correlate with the type of the PTS.

Further, reference has been predominantly made to a 3GPP LTE network architecture. However, in general, the techniques as described above may be readily employed with any other network architecture. In particular, such techniques as described above may also find application in fixed-line communication networks.

## Claims

1. A method of controlling discovery of a proxy node (103, 103-1, 103-2, 103-3) by a user equipment (201) of a communication network (200),
the user equipment (201) seeking to establish a data connection with a packet-based multimedia core network (250) via the proxy node (103, 103-1, 103-2, 103-3) and being in communication with a gateway node (107a) of the communication network (200) which handles data traffic to and from the user equipment (201),
the method comprising: a policy controller (102) of the communication network (200)
- receiving, from the proxy node (103, 103-1, 103-2, 103-3), a message indicative of an availability condition (600-1, 600-2) of the proxy node (103, 103-1, 103-2, 103-3),
- receiving, from the gateway node (107a), a connection setup request,
- based on the availability condition (600-1, 600-2), selectively signaling an identity of the proxy node (103, 103-1, 103-2, 103-3) to the gateway node (107a) in response to the connection setup request, thereby controlling discovery of the proxy node (103, 103-1, 103-2, 103-3).

2. The method of claim 1,
wherein, if the availability condition (600-1, 600-2) indicates a limited availability of the proxy node (103, 103-1, 103-2, 103-3), the signaling of the identity of the proxy node (103, 103-1, 103-2, 103-3) is executed to make the gateway node (107a) aware of the limited availability of the proxy node (103, 103-1, 103-2, 103-3), thereby avoiding discovery of the proxy node (103, 103-1, 103-2, 103-3) by the user equipment (201).

3. The method of claim 1,
wherein, if the availability condition (600-1, 600-2) indicates a limited availability of the proxy node (103, 103-1, 103-2, 103-3), the signaling of the identity of the proxy node (103, 103-1, 103-2, 103-3) is not executed.

4. The method of claim 3, further comprising: the policy controller (102)
- receiving, from a data repository (101), identities of a plurality of proxy nodes (103, 103-1, 103-2, 103-3) in response to the receiving of the connection setup request,
wherein the plurality of proxy nodes (103, 103-1, 103-2, 103-3) comprises the proxy node (103, 103-1, 103-2, 103-3),
- signaling the identities of the plurality of proxy nodes (103, 103-1, 103-2, 103-3) to the gateway node (107a), with the exception of the identity of the proxy node (103, 103-1, 103-2, 103-3), thereby avoiding discovery of the proxy node (103, 103-1, 103-2, 103-3) by the user equipment (201).

5. The method of claim 4, further comprising: the policy controller (102)
- receiving a subscriber identity associated with the user equipment (201),
- in response to the receiving of the connection setup request and the subscriber identity, signaling the subscriber identity to the data repository (101), thereby enabling receiving of identities of a subscriber-specific plurality of proxy nodes (103, 103-1, 103-2, 103-3).

6. The method of any one of the preceding claims, further comprising: the policy controller (102)
- maintaining a current status of the availability condition (600-1, 600-2) of the proxy node (103, 103-1, 103-2, 103-3), wherein said maintaining includes at least one step selected from the group comprising:
- repeatedly polling the availability condition (600-1, 600-2) of the proxy node (103, 103-1, 103-2, 103-3);
- repeatedly receiving the availability condition (600-1, 600-2) piggy-backed on further control messages;
- updating a stored list of available and/or unavailable proxy nodes (103, 103-1, 103-2, 103-3) based on the current status of the availability condition (600-1, 600-2) of the proxy node (103, 103-1, 103-2, 103-3).

7. The method of any one of the preceding claims,
wherein the availability condition (600-1, 600-2) relates to an overload situation of the proxy node (103, 103-1, 103-2, 103-3),
wherein the message indicates a severity (601) of the overload situation,
wherein the method further comprises:
- executing a threshold comparison of the severity (601) of the overload situation with a predefined threshold,
wherein the signaling is selectively executed in dependence of the threshold comparison.

8. A method of controlling discovery of a proxy node (103, 103-1, 103-2, 103-3) by a user equipment (201) of a communication network (200),
the user equipment (201) seeking to establish a data connection with a packet-based multimedia core network (250) via the proxy node (103, 103-1, 103-2, 103-3) and being in communication with a gateway node (107a) of the communication network (200) which handles data traffic to and from the user equipment (201),
the method comprising: the gateway node (107a)
- receiving, from the user equipment (201), a request for a data connection,
- signaling, to a policy controller (102) of the communication network (200), a connection setup request,
- receiving, from the policy controller (102), an identity of at least one proxy node (103, 103-1, 103-2, 103-3),
- signaling, to the user equipment (201), one of the at least one received identity of the at least one proxy node (103, 103-1, 103-2, 103-3).

9. The method of claim 8, further comprising:
- signaling, to the policy controller (102), a subscriber identity associated with the user equipment (201), thereby enabling receiving of identities of a subscriber-specific plurality of proxy nodes (103, 103-1, 103-2, 103-3).

10. A method of controlling discovery of a proxy node (103, 103-1, 103-2, 103-3) by a user equipment (201) of a communication network (200),
the user equipment (201) seeking to establish a data connection with a packet-based multimedia core network (250) via the proxy node (103, 103-1, 103-2, 103-3) and being in communication with a gateway node (107a) of the communication network (200) which handles data traffic to and from the user equipment (201),
the method comprising: the gateway node (107a)
- receiving, from the user equipment (201), a request for a data connection,
- signaling, to a policy controller (102) of the communication network (200), a connection setup request,
- receiving, from the policy controller (102), at least one identity of a proxy node (103, 103-1, 103-2, 103-3) having a limited availability,
- retrieving identities of a plurality of proxy nodes (103, 103-1, 103-2, 103-3) which comprise the received at least one identity of the proxy node (103, 103-1, 103-2, 103-3) having a limited availability,
- signaling, to the user equipment (201), the identity of at least one of the plurality of proxy nodes (103, 103-1, 103-2, 103-3) which is not the received at least one identity of the proxy node (103, 103-1, 103-2, 103-3) having a limited availability.

11. A method of controlling discovery of a proxy node (103, 103-1, 103-2, 103-3) by a user equipment (201) of a communication network (200),
the user equipment (201) seeking to establish a data connection with a packet-based multimedia core network (250) via the proxy node (103, 103-1, 103-2, 103-3) and being in communication with a gateway node (107a) of the communication network (200) which handles data traffic to and from the user equipment (201),
the method comprising: a data repository (101) of the communication network (200)
- receiving, from a policy controller (102) of the communication network (200), a request for identities of proxy nodes (103, 103-1, 103-2, 103-3) and a subscriber identity associated with the user equipment (201),
- selecting, based on the subscriber identity, the identity of at least one subscriber-specific proxy node (103, 103-1, 103-2, 103-3),
- signaling, to the policy controller (102), the identity of the subscriber-specific at least one proxy node (103, 103-1, 103-2, 103-3).

12. A policy controller (102) of a communication network (200) which is configured to control discovery of a proxy node (103, 103-1, 103-2, 103-3) by a user equipment (201) which seeks to establish a data connection with a packet-based multimedia core network (250) via the proxy node (103, 103-1, 103-2, 103-3),
the user equipment (201) being in communication with a gateway node (107a) in the communication network (200) which handles data traffic to and from the user equipment (201),
the policy controller (102) comprising:
- a first interface (102-1a) configured to receive, from the proxy node (103, 103-1, 103-2, 103-3), a message indicative of an availability condition (600-1, 600-2) of the proxy node (103, 103-1, 103-2, 103-3),
- a second interface (102-1b) configured to receive from the gateway node (107a) a connection setup request and further configured to, based on the availability condition (600-1, 600-2), selectively signal an identity of the proxy node (103, 103-1, 103-2, 103-3) to the gateway node (107a), thereby controlling discovery of the proxy node (103, 103-1, 103-2, 103-3).

13. The policy controller (102) of claim 12, wherein the policy controller (102) is configured to execute a method of any one of the claims 1 - 7.

14. A gateway node (107a) of a communication network (200) which is configured to control discovery of a proxy node (103, 103-1, 103-2, 103-3) by a user equipment (201) which seeks to establish a data connection with a packet-based multimedia core network (250) via the proxy node (103, 103-1, 103-2, 103-3),
the user equipment (201) being in communication with the gateway node (107a) which handles data traffic to and from the user equipment (201),
the gateway node (107a) comprising:
- a first interface (107a-1a) configured to receive, from the user equipment (201), a request for a data connection,
- a second interface (107a-1b) configured to signal, to a policy controller (102) of the communication network (200), a connection setup request and to receive, from the policy controller (102), an identity of at least one proxy node (103, 103-1, 103-2, 103-3),
wherein the first interface (107a-1a) is further configured to signal, to the user equipment (201), one of the at least one received identity of the at least one proxy node (103, 103-1, 103-2, 103-3).

15. The gateway node (107a) of claim 14,
wherein the second interface (107a-1b) is further configured to signal, to the policy controller (102), a subscriber identity associated with the user equipment (201), thereby enabling receiving of identities of a subscriber-specific plurality of proxy nodes (103, 103-1, 103-2, 103-3).

16. A gateway node (107a) of a communication network (200) which is configured to control discovery of a proxy node (103, 103-1, 103-2, 103-3) by a user equipment (201) which seeks to establish a data connection with a packet-based multimedia core network (250) via the proxy node (103, 103-1, 103-2, 103-3),
the user equipment (201) being in communication with the gateway node (107a) which handles data traffic to and from the user equipment (201),
the gateway node (107a) comprising:
- a first interface (107a-1a) configured to receive, from the user equipment (201), a request for a data connection,
- a second interface (107a-1b) configured to signal, to a policy controller (102) of the communication network (200), a connection setup request and to receive, from the policy controller (102), at least one identity of a proxy node (103, 103-1, 103-2, 103-3) having a limited availability,
- a processor (107a-2) configured to retrieve identities of a plurality of proxy nodes (103, 103-1, 103-2, 103-3) which comprise the at least one identity of the proxy node (103, 103-1, 103-2, 103-3) having a limited availability,
wherein the first interface (107a-1a) is further configured to signal, to the user equipment (201), the identity of at least one of the plurality of proxy nodes (103, 103-1, 103-2, 103-3) which is not the received at least one identity of the proxy node (103, 103-1, 103-2, 103-3) having a limited availability.

17. A data repository (101) of a communication network (200) which is configured to control discovery of a proxy node (103, 103-1, 103-2, 103-3) by a user equipment (201) which seeks to establish a data connection with a packet-based multimedia core network (250) via the proxy node (103, 103-1, 103-2, 103-3),
the user equipment (201) being in communication with the gateway node (107a) which handles data traffic to and from the user equipment (201),
the data repository (101) comprising:
- an interface (101-1) configured to receive, from a policy controller (102) of the communication network (200), a request for identities of proxy nodes (103, 103-1, 103-2, 103-3) and a subscriber identity associated with the user equipment (201),
- a processor (101-2) configured to select, based on the subscriber identity, the identity of at least one subscriber-specific proxy node (103, 103-1, 103-2, 103-3),
wherein the interface (101-1) is further configured to signal, to the policy controller (102), the identity of the subscriber-specific at least one proxy node (103, 103-1, 103-2, 103-3).
